**Europäisches Patentamt**

**European Patent Office**

**Office européen des brevets**

(11) Veröffentlichungsnummer: **0 153 785**
**B1**

(12) **EUROPÄISCHE PATENTSCHRIFT**

(45) Veröffentlichungstag der Patentschrift:
**12.07.89**

(21) Anmeldenummer: **85200214.6**

(22) Anmeldetag: **20.02.85**

(51) Int. Cl.⁴: **C 03 B 37/012,** C 03 B 19/04,
C 03 B 19/06

(54) **Verfahren zur Herstellung von rohrförmigen Körpern und Vorrichtung zur Durchführung des Verfahrens.**

(30) Priorität: **21.02.84 DE 3406148**

(43) Veröffentlichungstag der Anmeldung:
**04.09.85 Patentblatt 85/36**

(45) Bekanntmachung des Hinweises auf die Patenterteilung:
**12.07.89 Patentblatt 89/28**

(84) Benannte Vertragsstaaten:
**DE FR GB IT NL**

(56) Entgegenhaltungen:
EP-A-0 025 230
DE-A-2 637 937
DE-B-2 263 589
FR-A-2 490 211
GB-A-2 023 571
GB-A-2 067 181

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB IT NL**

(72) Erfinder: **Lydtin, Hans, Dr., Am Göpelschacht 9, D-5190 Stolberg (DE)**
Erfinder: **Clasen, Rolf, Dr. rer. nat., Schlossparkstrasse 36, D-5100 Aachen (DE)**

(74) Vertreter: **Nehmzow- David, Fritzi- Maria, Philips Patentverwaltung GmbH Wendenstrasse 35 Postfach 10 51 49, D-2000 Hamburg 1 (DE)**

## Beschreibung

Die Erfindung betrifft ein Verfahren zur Herstellung von rohrförmigen Körpern, bei welchem ein Gemisch aus dem Werkstoff des auszubildenden Körpers in Pulverform (feste Phase) mit einem Bindemittel in flüssiger Phase in eine Hohlform mit einer der Geometrie des auszubildenden Körpers entsprechenden Geometrie eingebracht wird, derart, daß die Hohlform um ihre Längsachse gedreht wird, wobei sich das Pulver-Bindemittel-Gemisch an der Innenwandung der Hohlform ablagert und überschüssiges Bindemittel entfernt wird, wonach der entstandene Grünkörper weiterbearbeitet wird.

Die Erfindung betrifft weiter eine Vorrichtung zur Durchführung eines solchen Verfahrens.

Ein Verfahren der eingangs beschriebenen Art ist bekannt aus GB-A-682 580. Dieses bekannte Verfahren dient dazu, poröse Glasrohre, z. B. als Filter für Laborzwecke, herzustellen, wobei es auf eine möglichst gleichmäßige Porenverteilung und Porengröße zwischen den angeschmolzenen Glaspartikeln ankommt und die Poren untereinander in Verbindung stehen müssen.

Zu diesem Zweck werden Suspensionen von Glaspulver möglichst einheitlicher Korngröße in einem, ein Absetzen der Feststoffpartikel verhindernden Bindemittel, z. B. einer wässerigen Glyzerinlösung, unter Zusatz von Benetzungsmitteln und Mitteln, die ein Aufschäumen der Suspension verhindern, ständig gerührt, um die Feststoffpartikel innerhalb der Suspension in einem gewünschten, der späteren Porosität entsprechenden, Verteilungszustand zu halten, bevor sie in die Zentrifuge eingebracht werden und dort auf der Innenwand einen lockeren Verbund abgeschiedener Feststoffpartikel bilden.

Ein solches Verfahren ist nicht geeignet, wenn auf einer Zentrifugeninnenwand Feststoffpartikel abgeschieden werden sollen, die in möglichst dichter Feststoffpackung vorliegen müssen.

Ein Verfahren zur Herstellung von Glaskörpern, die als sogenannte Preform für die Herstellung von optischen Fasern verwendet werden sollen, das ebenfalls mit der zentrifugalen Abscheidung von Glaspartikeln, jedoch nicht in einer Suspension, sondern trocken, auf der Innenwand einer Zentrifuge arbeitet, ist aus DE-C-3 240 355 bekannt. Hier werden die Feststoffpartikel trocken als Schüttkörper während der Schüttung durch Rotationsfliehkraft an der Innenfläche eines Stötzkörpers gehalten. Der Schüttkörper muß anschließend an seinem Umfang formstabilisiert werden mittels Erhitzen und/oder durch Auftragen von erhärtenden Klebern. Der formstabilisierte Schüttkörper muß dann anschließend zu einem feinporigen Festkörper verpreßt werden, da die durch die Schüttung erreichte Dichte der Feststoffpartikel für die Anfurderungen, die an eine Preform für optische Fasern gestellt werden müssen, nicht ausreicht. Mit diesem bekannten Verfahren sind die Nachteile verbunden, daß erstens eine Formstabilisierung der Schüttkörper vorgenommen werden muß, daß aber auch die für eine Preform für optische Fasern erforderliche Dichte der Festkörperpackung durch einen anschließenden Preßprozeß erst noch hergestellt werden muß. Der anschließende Preßprozeß zur Bildung eines feinporigen Festkörpers hat außer, daß er einen zusätzlichen Prozeßschritt darstellt, noch den Nachteil, daß eine durch die Schöttung von Körnern unterschiedlicher Stoffe zunächst hergestellte definierte inhomogene Brechungsindexverteilung beeinträchtigt werden könnte.

Dadurch, daß die Pulver trocken zentrifugiert werden, können auch Probleme hinsichtlich der Homogenität des abgeschiedenen Materials auftreten; aufgrund elektrostatischer Aufladungen wird eine gleichmäßige Sedimentation und der Zusammenhalt der Formkörper erschwert. Ein weiterer Nachteil ist, daß der Schüttkörper ein örtlich unterschiedliches Schwindungsverhalten aufweisen kann; dies führt leicht zu Delamination einzelner Schichten.

Der Erfindung liegt die Aufgabe zugrunde, das eingangs genannte Verfahren derart zu verbessern, daß rohrförmige Körper hergestellt werden können, die eine sehr hohe Packungsdichte der Feststoffpartikel in der abgeschiedenen Schicht aufweisen, mit dem Schichten von Feststoffpartikeln unterschiedlicher chemischer Zusammensetzung definiert und in hoher Packungsdichte abgeschieden werden können, ohne daß die definierte Anordnung chemisch unterschiedlicher Feststoffpartikelschichten durch nachfolgende Bearbeitungsschritte des Grünkörpers gestört wird und das es ermöglicht, insbesondere $SiO_2$-Rohre hoher Dichte, Homogenität und Reinheit herzustellen, die gerade noch eine so geringe Porosität aufweisen, daß eine nachfolgende Reinigung unter Einfluß von Gasen gut durchführbar ist und eine Sinterung zu Quarzglasrohren insbesondere einer für die Herstellung von optischen Wellenleitern erforderlichen Qualität ermöglicht wird.

Diese Aufgabe wird erfindungsgemäß dadurch gelöst, daß die feste Phase und die flüssige Phase getrennt voneinander in die Hohlform eingebracht werden.

Nach einer vorteilhaften Weiterbildung der Erfindung werden das Bindemittel und die feste Phase nacheinander über Dosiervorrichtungen in die Hohlform eingebracht, wobei zunächst die flüssige Phase auf der Innenwandung der Hohlform abgeschieden wird.

Hiermit ist der Vorteil verbunden, daß zunächst Bindemittel in Form eines Flüssigkeitsfilmes auf der Innenwandung der Hohlform abgeschieden werden kann.

Das Bindemittel kann Flüssigkeiten unterschiedlicher Art umfassen. Für diesen Zweck kann jede indifferente Flüssigkeit benutzt werden, z. B. Wasser, organische Flüssigkeiten, gegebenenfalls unter Zusatz von Dispergierstoffen, Stabilisierungsstoffen oder dergleichen, die dem Fachmann wohl bekannt sind.

Anschließend kann die pulverförmige feste Phase auf der Bindemittelschicht abgeschieden werden. Durch Zentrifugalkräfte werden die Feststoffpartikel auf den Flüssigkeitsfilm getrieben, wo eine Benetzung erfolgen kann und die feinen Teilchen mit Dispergiermittel überzogen und vor einer frühzeitigen Koagulation bewahrt werden. Im Flüssigkeitsfilm driften die Feststoffpartikel nun getrennt voneinander zur Innenwandung der Hohlform, wo sie mit großer Packungsdichte (50 bis 90 % der theoretisch möglichen Packungsdichte) abgelagert werden. Die Zwischenräume bleiben mit der flüssigen Phase, die ein Dispergiermittel und ein Bindemittel enthalten kann, ausgefüllt. Um eine gleichmäßige Ablagerung der Feststoffpartikel längs der Achse der Hohlform zu erleichtern, kann die Pulvereingabe kontinuierlich in axialer Richtung verschiebbar vorgenommen werden. Um eine möglichst schnelle Abscheidung zu erreichen, kann die Zugabe der flüssigen Phase ebenfalls kontinuierlich über getrennte Zuführungen vorgenommen und gerade so bemessen werden, daß die abgeschiedene Feststoffpartikelschicht stets nur mit einem dünnen Flössigkeitsfilm bedeckt ist. Die Vorteile sind hierbei, daß die Prozeßdauer gegenüber einer einmaligen Zugabe der benötigten Menge an flüssiger Phase erheblich vermindert werden kann, da die Abscheidungszeit proportional zur Viskosität der flössigen Phase und der Filmdicke ist. Eine Separation von Feststoffpartikeln unterschiedlicher Dichte und Abmessungen wird durch diese Maßnahme minimiert. Die innen zu beschichtende Hohlform kann sowohl in horizontaler als auch in vertikaler Position um ihre Längsachse drehbar sein.

Nach einer weiteren vorteilhaften Ausgestaltung der Erfindung werden das Bindemittel und die feste Phase gleichzeitig über die Dosiervorrichtungen in die Hohlform eingebracht, wobei überschüssige flüssige Phase während des Prozesses abgesaugt wird.

Hiermit ist der Vorteil verbunden, daß jeweils nur ein sehr dünner Flüssigkeitsfilm (1 mm, vorzugsweise 10 bis 100 µm) über bereits abgeschiedenen Feststoffpartikeln steht, was die Sedimentationszeit der Feststoffpartikel verkürzt und damit eine Entmischung von Feststoffpartikeln unterschiedlicher Größe während der Sedimentationszeit vermindert. Nach diesem Verfahren lassen sich alle irgendwie strukturierten Rohre (Vorformen für Singlemoden- und Gradientenfasern) herstellen.

In diesem Zusammenhang ist von Bedeutung, daß Grünkörper, die anschließend zu transparentem Glas gesintert werden sollen, eine sehr gleichmäßige Kornverteilung in axialer und radialer Richtung aufweisen müssen. Nur so lassen sich Schrumpfungsrisse beim Trocknen dieser aus submikroskopischen Teilchen bestehenden Grünkörper vermindern. Da fertig im Handel erhältliche bekannte Feststoffpartikel-Ausgangsmaterialien, die für die Herstellung von optischen Wellenleitern verwendet werden, breite Kornverteilungen aufzuweisen pflegen (z. B. Korndurchmesser von 5 bis 500 nm), ist es notwendig, zunächst eine Klassierung der Ausgangspulver vorzunehmen. Eine solche Klassierung kann beispielsweise so erfolgen, daß 1200 g eines im Handel erhältlichen Ausgangsmaterials für die Herstellung von optischen Wellenleitern (hochdisperses $SiO_2$-Pulver) in 2000 cm³ wässeriger konzentrierter Ammoniaklösung verrührt und 30 Minuten lang unter Ultraschalleinwirkung dispergiert werden. Eine solche Suspension wird in einer großen Laborzentrifuge 30 min bei 2,2 x $10^4$ g zentrifugiert, die klare Lösung abgegossen und die sedimentierten Körper eine Stunde bei 120°C getrocknet. Anschließend erfolgt die Klassierung in feines, mittleres und grobes Pulver, dadurch, daß der Sedimentkörper entsprechend den abgeschiedenen Kornfraktionen in drei Teile aufgeteilt wird. Jedes Drittel des ursprünglichen Sedimentkörpers kann jetzt allein als Ausgangsmaterial zur Herstellung eines Grünkörpers nach dem Verfahren gemäß der Erfindung erfolgreich eingesetzt werden.

Nach einer vorteilhaften Weiterbildung des Verfahrens nach der Erfindung wird auf die Innenwandung der Hohlform vor Anbringen von Pulver und Bindemittel ein Gleitfilm zur besseren Entformbarkeit des Grünkörpers aufgebracht. Der Gleitfilm kann vorzugsweise aus hochmolekularen Kohlenwasserstoffen, z. B. Paraffin bestehen. Beispielsweise wird ein Paraffin mit einem Schmelzpunkt von 46 bis 50°C eingesetzt; der auf der Innenwandung der Hohlform sedimentierte Grönkörper kann dann durch leichtes Erwärmen der Hohlform mit z. B. einem Heißluftgebläse oder z. B. durch Eintauchen in heißes Wasser sehr leicht entformt werden.

Nach vorteilhaften Weiterbildungen der Erfindung werden als Bindemittel ein- oder mehrphasige Flüssigkeits-Binder-Gemische eingesetzt, wobei als Bindemittel vorzugsweise anorganisch/organische Lösungen, organische Substanzen oder auch eine hydrophobe Flüssigkeit eingesetzt wird.

Eine hydrophobe Flüssigkeit ist beispielsweise ein bei Raumtemperatur flüssiges Paraffin. Wider Erwarten findet auch hier ein Feststoffpartikeltransport im Bindemittel statt. Es wird vermutet, daß die auf der Oberfläche von z. B. $SiO_2$-Feststoffpartikeln adsorbierten OH-Gruppen hier eine Rolle spielen, daß z. B. eine ausreichende Stabilität der Feststoffpartikel untereinander durch Brückenbildung erreicht wird.

Nach der Sedimentation der Feststoffpartikel kann eine Entformung leicht durch Erwärmen der Hohlform auf etwa 100 bis 150°C erreicht werden.

Praktisch für einen industriellen Fertigungsprozeß sind nach einer vorteilhaften Weiterbildung des Verfahrens gemäß der Erfindung als Bindemittel UV-härtende Polymere, die bei Raumtemperatur dünnflüssig sind.

Nach weiteren vorteilhaften Ausgestaltungen der Erfindung ist die feste Phase ein für optische Wellenleiter geeigneter Werkstoff, insbesondere hochdisperses $SiO_2$-Pulver einer Korngröße im Bereich von 5 bis 500 nm, vorzugsweise von 10 bis 200 nm ohne oder mit für die Einstellung eines gewünschten Brechungsindex geeignete(r) Dotierung. Die Dotierung kann beispielsweise über

Zugabe von GeO$_2$-Pulver erfolgen.

Nach vorteilhaften Weiterbildungen der Erfindung wird der pulverkeramische Werkstoff, z. B. für die Herstellung von optischen Wellenleitern, in Chargen abweichender chemischer Zusammensetzung nacheinander in die Hohlform eingebracht, insbesondere derart, daß sich Schichten unterschiedlicher Zusammensetzung entsprechend einem gewünschten Brechungsindexprofil auf der Innenwandung der Hohlform abscheiden. Durch Zuführung unterschiedlich zusammengesetzter fester Phasen und Variation ihres Verhältnisses zueinander über die Zeit lassen sich nahezu beliebige Zusammensetzungen über die Wanddicke aufbauen. Für die Herstellung von optischen Wellenleitern ist die definierte Änderung des Brechungsindex über den Radius von großer Bedeutung.

Durch Einsetzen mehrerer Dosiervorrichtungen ist es möglich, unterschiedliche Feststoffpartikelströme in den Innenraum der Hohlform zu leiten, z. B. reines SiO$_2$-Pulver und mit GeO$_2$ dotiertes SiO$_2$-Pulver, um so beliebige Brechungsindexprofile im abgeschiedenen Grünkörper aufzubauen.

Nach einer vorteilhaften Ausgestaltung des Verfahrens nach der Erfindung wird die Herstellung der festen Phase über einen chemischen Prozeß in der Gasphase unmittelbar vor ihrer Abscheidung auf der Innenwandung der Hohlform vorgenommen, derart, daß gasförmige Ausgangssubstanzen in oder unmittelbar vor der als Zentrifuge wirkenden Hohlform erhitzt und reaktiv umgesetzt werden, wobei die Gasphase als Dispergiermittel für die entstehende feste Phase wirkt. Hierbei werden als gasförmige Ausgangssubstanzen vorteilhafterweise SiH$_4$ und O$_2$ eingesetzt; dem Fachmann sind für derartige Prozesse jedoch z. B. auch die Halogenide des Siliciums bekannt. Die während des Prozeßablaufes erst entstehenden Feststoffpartikel geraten direkt in das Beschleunigungsfeld der Zentrifuge und sedimentieren auf der Innenwandung der Hohlform. Ein Vorteil dieses "in situ"-Prozesses ist die genaue Dosierbarkeit der Feststoffpartikel und ihre nahezu ideale Dispersion in der Gasphase. Der Nachteil einer konvektiven Gasströmung kann hierdurch kompensiert werden.

Eine Vorrichtung zur Durchführung des erfindungsgemäßen Verfahrens mit einer als Zentrifuge antreibbaren Hohlform, auf deren Innenwandung durch Zentrifugalkräfte in die Hohlform eingebrachte Stoffe abscheidbar sind, ist erfindungsgemäß dadurch gekennzeichnet, daß die Hohlform durch zwei senkrecht zur Längsachse der Hohlform angeordnete Aperturblenden verschließbar ist, durch deren Öffnungen mindestens je ein Rohr als Dosiervorrichtung entlang der Längsachse der Hohlform verschiebbar sind, derart, daß ein Teil des(der) Rohres (Rohre) außerhalb der Hohlform verbleibt und von dort mit in den Innenraum der Hohlform einzubringenden Stoffen beschickbar ist und der andere, im Innenraum befindliche Teil des(der) Rohres (Rohre) mit mindestens je einer Austrittsöffnung (Düse) versehen ist, durch die in den Rohren befindliche Stoffe zunächst in den Innenraum der Hohlform gelangen und auf deren Innenwandung abscheidbar sind, wobei nach vorteilhaften Weiterbildungen der Erfindung die Hohlform ein Rohr ist, das stirnseitig mit den Aperturblenden verschließbar der Zentrifugalantrieb der Hohlform mit Hilfe eines Motors, mit dessen Achse die Hohlform verbunden ist, erfolgt oder der Zentrifugalantrieb der Hohlform derart erfolgt, daß die Hohlform Rotor eines Elektro-Motors ist.

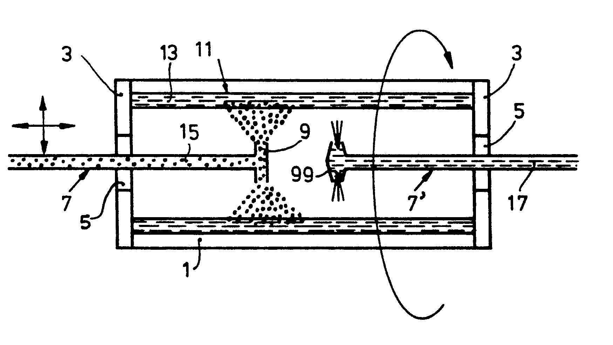

Ausführungsbeispiele der Erfindung werden im folgenden anhand der Zeichnung näher beschrieben und in ihrer Wirkungsweise erläutert.

Die Figur zeigt eine schematische Darstellung einer Zentrifugenanordnung mit einer Hohlform zur Herstell von rohrförmigen Körpern nach der Erfindung.

In ein horizontal (oder auch vertikal) gelagertes Rohr als Hohlform 1, dessen Stirnflächen durch abnehmbare und in der Größe ihrer Öffnung 5 einstellbare Aperturblenden 3 teilweise verschlossen sind, wird zunächst eine flüssige Phase 17 eingebracht und durch Zentrifugieren gleichmäßig in Form eines Flüssigkeitsfilmes 13 auf der Innenwandung 11 des als Hohlform 1 eingesetzten Rohres verteilt. Anschließend wird über eine in axialer und radialer Richtung bewegliche Dosiervorrichtung in Form von mindestens einem Rohr 7 mit Austrittsöffnungen 9 pulverförmiges Ausgangsmaterial 15 dem Innenraum des als Hohlform 1 wirkenden Rohres zugeführt. Durch Zentrifugalkräfte werden die Feststoffpartikel auf den Flüssigkeitsfilm 13 getrieben, wo eine Benetzung erfolgen kann und die feinen Teilchen mit Dispergiermittel überzogen und vor einer frühzeitigen Koagulation bewahrt werden. Im Flüssigkeitsfilm 13 driften die Feststoffpartikel nun getrennt voneinander in Richtung auf die Innenwandung 11 der Hohlform 1, wo sie mit großer Packungsdichte (50 bis 90 % der theoretisch möglichen Packungsdichte) abgelagert werden.

Die Zwischenräume bleiben mit der flüssigen Phase, die ein z. B. Dispergiermittel und ein Bindemittel enthält, ausgefüllt. Um eine gleichmäßige Ablagerung der Feststoffpartikel längs der Rohrachse der Hohlform 1 zu erleichtern, kann die Feststoffpartikeleingabe kontinuierlich in axialer Richtung verschoben vorgenommen werden. Um eine möglichst schnelle Abscheidung zu erreichen, kann die Zugabe der flüssigen Phase 17 ebenfalls kontinuierlich über eine getrennte Dosiervorrichtung in Form eines weiteren Rohres 7' über eine Düse 99 vorgenommen und gerade so bemessen werden, daß die abgeschiedene Feststoffpartikelschicht stets nur mit einem dünnen Flüssigkeitsfilm bedeckt ist. Hierbei ergeben sich folgende Vorteile: Die Prozeßdauer kann gegenüber einer einmaligen Zugabe der benötigten flüssigen Phase erheblich vermindert werden, da die Abscheidungszeit proportional zur Viskosität der Flüssigkeit und der Filmdicke ist. Eine Separation von Feststoffpartikeln unterschiedlicher Dichte und Abmessungen wird durch diese Maßnahme minimiert. Die innen zu beschichtende Hohlform kann sowohl in horizontaler als auch vertikaler Position um ihre Längsachse gedreht werden.

Im folgenden werden unterschiedliche Ausführungsbeispiele zur Herstellung von SiO₂-Rohren hoher Dichte, Homogenität und Reinheit beschrieben.

**Beispiel 1:**

In ein rotierendes hochfestes Metallrohr, z. B. aus Stahl oder Aluminium, mit einer Gesamtlänge von 160 mm und einem äußeren Durchmesser von 60 mm, dessen Endflächen mit abnehmbaren Aperturblenden in einer Dicke von 5 mm versehen sind, werden bei einer Rotationsfrequenz von zunächst 1000 U/min etwa 120 ml einer 15 %-igen Polyvinylalkohollösung (Polymerisationsgrad 350) eingebracht. Nach erfolgter Gleichverteilung der Flüssigkeit über die Innenwandung des Rohres wird über eine in axialer Richtung bewegliche Dosiervorrichtung 210 g feinverteiltes hochdisperses SiO₂-Pulver mit einer Dosierrate von 1 g/min ebenfalls gleichmäßig durch Hin- und Herfahren der Dosiervorrichtung mit einer Geschwindigkeit von 5 m/min bei gleichzeitiger Erhöhung der Rotationsfrequenz des Rohres auf 30 000 U/min verteilt. Nach erfolgter Sedimentation der Feststoffpartikel unter einer Zentrifugalbeschleunigung, die in diesem Fall etwa 20 000 mal größer als die Erdbeschleunigung ist, wird der über der Abscheidung liegende überschüssige Flüssigkeitsfilm abgesaugt und der abgeschiedene Grünkörper durch leichte Erwärmung des Substratrohres, etwa auf 50 bis 100°C, entformt. Um die Entformung zu erleichtern, empfiehlt sich eine dünnlagige Abscheidung eines Gleitfilmes zu Beginn des Prozesses auf der Innenwandung des Rohres, z. B. aus Paraffin. Der auf diese Weise erhaltene Grönkörper zeichnet sich durch große geometrische Genauigkeit und eine nahezu ortsunabhängige Dichte aus. Letzteres und die Tatsache, daß nach Trocknung bei 120°C und Austreiben des Bindemittels durch langsames Aufheizen auf 500°C bei einer Aufheizgeschwindigkeit von 150°C/h eine geringe offene Porenstruktur zur Verfügung steht, macht eine nachfolgende chlorierende Reinigung des Grönkörpers und die Sinterung zu Quarzglasrohren möglich. Verunreinigungen können z. B. H₂O oder störende Metallverbindungen sein. Derartige Verunreinigungen wurden bei 800°C in einem bei Raumtemperatur mit SOCl₂ gesättigten O₂-Strom einer Strömungsgeschwindigkeit von 1 bis 2 l/min beseitigt. Die Verunreinigungen werden dabei chloriert und entweichen als flüchtige Phase. Die Dichtsinterung des geringfügig offenporigen Grünkörpers zu transparentem, blasenfreiem Glas erfolgte bei 1500°C mit einer Absenkgeschwindigkeit von 3 mm/min unter einer Helium/Chlor (1 bis 3 %)-Atmosphäre eines Druckes von 10⁵ Pa und einer Strömungsgeschwindigkeit von 1 l/min. Nach diesem Verfahren wurde ein hochreines, transparentes Quarzglasrohr hoher Oberflächengöte erhalten.

**Beispiel 2:**

Eine beschleunigte Herstellung von Grünkörpern auf der Basis von SiO₂/Bindemittel kann auf die Weise erreicht werden, daß die flüssige Phase (vergleiche Beispiel 1) während der Feststoffpartikelzugabe ebenfalls kontinuierlich zugeführt wird, derart, daß nur ein dünner Flüssigkeitsfilm (1 mm, vorzugsweise 10 bis 100 µm) über den bereits abgeschiedenen Feststoffpartikeln steht. Durch diese Maßnahme ist es einerseits möglich, die Geschwindigkeit der Feststoffpartikelzugabe auf 5 g/min problemlos zu steigern und darüberhinaus eine Entmischung von Feststoffpartikelteilchen unterschiedlicher Größe während der kurzen Sedimentationszeit zu vermindern.

**Beispiel 3:**

Die Herstellung von Grünkörpern auf Basis von Feststoffpartikeln/Bindemittel mit Variation der Zusammensetzung über die Wanddicke kann wie folgt erfolgen:

Zunächst wird flüssige Phase, wie in Beispiel 1 beschrieben, in die Hohlform eingebracht. Durch Zuführung unterschiedlich zusammengesetzter Ausgangspulver (Feststoffpartikel) und Variation ihres Verhältnisses zueinander über die Zeit lassen sich nahezu beliebige Zusammensetzungen über die Wanddicke aufbauen. Für die Herstellung von optischen Wellenleitern ist die definierte Änderung des Brechungsindex über den Radius von großer Bedeutung. Durch Einführung z. B. einer zweiten Dosiervorrichtung in Form eines zweiten Rohres, das sich ebenfalls in axialer Richtung verschieben läßt, kann z. B. 15 Gew.-% GeO₂ enthaltendes SiO₂-Pulver in das Innere der rotierenden Hohlform simultan mit reinem SiO₂-Pulver eingebracht werden. Zu Beginn des Prozesses wird zunächst nur reines SiO₂-Pulver in einer Dosierrate von 1 g/min zugeführt. Während des Prozesses wird dann bei Konstanthaltung der Dosierrate von 1 g/min die Dosierung des reinen SiO₂-Pulvers linear bis auf Null zurückgenommen bei gleichzeitiger und entsprechender Erhöhung der Dosierrate des SiO₂-GeO₂-Pulver-Stromes. Nach den notwendigen Zwischenschritten des Ausheizens, Reinigens, Sinterns, Kollabierens und Faserziehens lassen sich auf diese Weise Gradienten-Index- Fasern mit Dämpfungen von weniger als 1 dB/km bei 1300 nm herstellen.

**Beispiel 4:**

Die Herstellung von rohrförmigen Körpern auf Feststoffpartikelbasis, bei dem das feinpulverige Ausgangsmaterial in eine hydrophobe Flüssigkeit zentrifugiert wird, kann auf folgende Weise vorgenommen werden.

Es wird gearbeitet wie unter den Beispielen 1 bis 3 beschrieben, mit dem Unterschied, daß anstelle von wässerigen Polyvinylalkohollösungen ein bei Raumtemperatur flüssiges Paraffin verwendet wird.

Nach Sedimentation des Grünkörpers kann die Entformung aus der Hohlform durch eine Erwärmung der Hohlform auf etwa 100 bis 150°C vorgenommen werden.

Statt einer hydrophoben Flüssigkeit als Bindemittel lassen sich auch mit Vorteil thermoplastische oder duroplastische Kunststoffe als Dispergiermatrix und Bindemittel einsetzen. Als interessant hat sich die Verwendung von solchen UV-härtenden Lacken herausgestellt, die bei Raumtemperatur dünnflüssig sind und erst durch Einwirkung von UV-Strahlung aushärten.

**Beispiel 5:**

Die Herstellung und Abscheidung von Feststoffpartikeln in einem einzigen Prozeßschritt mit anschließendem Zentrifugieren kann wie folgt vorgenommen werden:

Zunächst wird flüssige Phase, wie in Beispiel 1 beschrieben, in die Hohlform eingebracht.

Als Ausgangsmaterialien für die Erzeugung der festen Phase dienen gasförmige Substanzen wie $SH_4$ und $O_2$, die über einen in axialer Richtung verschiebbaren Ringbrenner in den Innenraum der rotierenden Hohlform unter gleichzeitiger reaktiver Umsetzung eingebracht werden. Wegen der entstehenden und abzuführenden Gase werden die Reaktionen in Brennerdüsen durchgeführt, die zylindersymmetrisch auf einem Ring mit dem Radius $r_0 < r < r_i$ ($r_0$ = Achse der rotierenden zylindrischen Hohlform; $r_i$ = Innenradius der zylindrischen Hohlform) liegen. Die Folge ist, daß die unmittelbar hinter den Brennerdüsen entstehenden Feststoffpartikel direkt in das Beschleunigungsfeld der Zentrifuge geraten und in Richtung auf die Innenwandung der Hohlform sedimentieren. Ein Vorteil dieses in situ-Prozesses ist die genaue Dosierbarkeit der Materialien und ihre nahezu ideale Dispersion in der Gasphase.

Es wurde mit folgenden Prozeßparametern gearbeitet:
Gasflüsse: $SiH_4 = 165$ cm³/min; $O_2 = 650$ cm³/min;
diese Werte beziehen sich auf einen Druck von $10{,}11 \cdot 10^4$ Pa;
Umdrehungsgeschwindigkeit der Hohlform: 1500 U/min;
Abscheidungsdauer: 6 Stunden;
Abgeschiedene $SiO_2$-Feststoffpartikelmasse: 180

g.

Als Ausführungsbeispiele wurden Beispiele beschrieben, die sich auf die Herstellung von hochreinen oder dotierten Quarzglasrohren beziehen. Nach dem vorliegenden Verfahren und der vorliegenden Vorrichtung lassen sich jedoch auch Rohre aus beliebigen anderen Werkstoffen herstellen, z. B. aus Aluminiumoxid oder Eisen.

Hochreine und maßgenaue Quarzrohre, wie sie nach dem vorliegenden Verfahren herstellbar sind, können bei der Herstellung von optischen Wellenleitern, aber auch bei der Herstellung von Halogen- und Gasentladungslampen Anwendung finden.

**Patentansprüche**

1. Verfahren zur Herstellung von rohrförmigen Körpern, bei welchem ein Gemisch aus dem Werkstoff des auszubildenden Körpers in Pulverform (feste Phase (15)) und einem Bindemittel in flüssiger Phase (17) in eine Hohlform (1) mit einer der Geometrie des auszubildenden Körpers entsprechenden Geometrie eingebracht wird, derart, daß die Hohlform um ihre Längsachse gedreht wird, wobei sich das Pulver-Bindemittel-Gemisch an der Innenwandung (11) der Hohlform ablagert und überschüssiges Bindemittel entfernt wird, wonach der entstandene Grünkörper weiterbearbeitet wird,
dadurch gekennzeichnet,
daß die feste Phase (15) und die flüssige Phase (17) getrennt voneinander in die Hohlform (1) eingebracht werden.

2. Verfahren nach Anspruch 1,
dadurch gekennzeichnet,
daß das Bindemittel und die feste Phase (15) nacheinander über Dosiervorrichtung (7, 7') in die Hohlform (1) eingebracht werden, wobei zunächst die flüssige Phase (17) auf der Innenwandung (11) der Hohlform (1) abgeschieden wird.

3. Verfahren nach Anspruch 2,
dadurch gekennzeichnet,
daß das Bindemittel und die feste Phase (15) nacheinander mehrfach wiederholt über die Dosiervorrichtungen (7, 7') in die Hohlform (1) eingebracht werden.

4. Verfahren nach Anspruch 1,
dadurch gekennzeichnet,
daß das Bindemittel und die feste Phase (15) gleichzeitig über getrennte Dosiervorrichtungen (7, 7') in die Hohlform (1) eingebracht werden, wobei überschüssige flüssige Phase (17) während des Prozesses abgesaugt wird.

5. Verfahren nach den Ansprüchen 1 bis 4,
dadurch gekennzeichnet, daß die Dosiervorrichtungen (7, 7') und die Hohlform (1) relativ zueinander bewegt werden während des Einbringens der festen Phase (15) und der flüssigen Phase (17).

6. Verfahren nach Anspruch 1,
dadurch gekennzeichnet,

daß auf die Innenwandung (11) der Hohlform (1) vor Anbringen von flüssiger Phase (17) und fester Phase (15) ein Gleitfilm zur besseren Entformbarkeit des Grünkörpers aufgebracht wird.

7. Verfahren nach Anspruch 6,
dadurch gekennzeichnet,
daß als Gleitfilm hochmolekulare Kohlenwasserstoffe angebracht werden.

8. Verfahren nach Anspruch 1,
dadurch gekennzeichnet,
daß das Bindemittel mehrphasig ist.

9. Verfahren nach Anspruch 1, dadurch gekennzeichnet,
daß als Bindemittel eine hydrophobe Flüssigkeit eingesetzt wird.

10. Verfahren nach Anspruch 9,
dadurch gekennzeichnet,
daß als Bindemittel ein bei Raumtemperatur flüssiges Paraffin eingesetzt wird.

11. Verfahren nach Anspruch 1,
dadurch gekennzeichnet,
daß die feste Phase (15) ein pulverkeramischer Werkstoff ist.

12. Verfahren nach Anspruch 11,
dadurch gekennzeichnet,
daß der pulverkeramische Werkstoff ein für die Herstellung von optischen Wellenleitern geeigneter Werkstoff ist.

13. Verfahren nach Anspruch 11,
dadurch gekennzeichnet,
daß der pulverkeramische Werkstoff $Al_2O_3$ ist.

14. Verfahren nach Anspruch 12,
dadurch gekennzeichnet,
daß der Werkstoff hochdisperses $SiO_2$-Pulver einer Korngröße im Bereich von 5 bis 500 nm, vorzugsweise von 10 bis 200 nm, ohne oder mit für die Einstellung eines gewünschten Brechungsindex geeignete(r) Dotierung ist.

15. Verfahren nach einem der vorhergehenden Ansprüche 1 bis 14,
dadurch gekennzeichnet,
daß die feste Phase (15) über einen chemischen Prozeß in der Gasphase hergestellt wird.

16. Verfahren nach Anspruch 15,
dadurch gekennzeichnet,
daß die Herstellung der festen Phase (15) über einen chemischen Prozeß in der Gasphase unmittelbar vor ihrer Abscheidung auf der Innenwandung (11) der Hohlform (1) vorgenommen wird.

17. Verfahren nach Anspruch 16,
dadurch gekennzeichnet,
daß als gasförmige Ausgangssubstanzen $SiH_4$ und $O_2$ eingesetzt werden.

18. Verfahren nach Anspruch 16,
dadurch gekennzeichnet,
daß die Erhitzung der gasförmigen Ausgangssubstanzen über mindestens eine in axialer Richtung über die Hohlform (1) verschiebbare Heizvorrichtungen vorgenommen wird.

19. Verfahren nach Anspruch 1,
dadurch gekennzeichnet,
daß die feste Phase (15) ein pulvermetallurgischer Werkstoff ist.

20. Verfahren nach Anspruch 1,
dadurch gekennzeichnet,
daß die feste Phase (15) in Chargen abweichender chemischer Zusammensetzung nacheinander in die Hohlform (1) eingebracht wird.

21. Verfahren nach Anspruch 20,
dadurch gekennzeichnet,
daß die feste Phase (15) derart in die Hohlform (1) eingebracht wird, daß sich Schichten unterschiedlicher Zusammensetzung entsprechend einem gewünschten Brechungsindexprofil auf der Innenwandung (11) der Hohlform abscheiden.

22. Verfahren nach Anspruch 14,
dadurch gekennzeichnet,
daß als Dotierstoff $GeO_2$ eingesetzt wird.

23. Vorrichtung zur Durchführung des Verfahrens gemäß den Ansprüchen 1 bis 22 mit einer als Zentrifuge antreibbaren Hohlform (1), auf deren Innenwandung (11) durch Zentrifugalkräfte in die Hohlform eingebrachte Stoffe abscheidbar sind,
dadurch gekennzeichnet,
daß die Hohlform (1) durch zwei senkrecht zur Längsachse der Hohlform angeordnete Aperturblenden (3) verschließbar ist, durch deren Öffnungen (5) mindestens je ein Rohr (7, 7') als Dosiervorrichtung entlang der Längsachse der Hohlform verschiebbar sind, derart, daß ein Teil des(der) Rohres (Rohre) außerhalb der Hohlform verbleibt und von dort mit in den Innenraum der Hohlraum einzubringenden Stoffen beschickbar ist und der andere, im Innenraum der Hohlform befindliche Teil des(der) Rohres (Rohre) mit mindestens je einer Austrittsöffnung (Düse) (9, 99) versehen ist, durch die in den Rohren befindliche Stoffe zunächst in den Innenraum der Hohlform gelangen und auf deren Innenwandung (11) abscheidbar sind.

24. Vorrichtung nach Anspruch 23,
dadurch gekennzeichnet,
daß die Rohre (7, 7') um ihre Längsachse drehbar sind.

25. Vorrichtung nach Anspruch 23,
dadurch gekennzeichnet,
daß die Hohlform (1) ein Rohr ist, das stirnseitig mit den Aperturblenden (3) verschließbar ist.

26. Vorrichtung nach Anspruch 23,
dadurch gekennzeichnet,
daß der Zentrifugalantrieb der Hohlform (1) mit Hilfe eines Motors, mit dessen Achse die Hohlform verbunden ist, erfolgt.

27. Vorrichtung nach Anspruch 23,
dadurch gekennzeichnet,
daß der Zentrifugalantrieb der Hohlform (1) derart erfolgt, daß die Hohlform Rotor eines Elektro-Motors ist.

28. Verwendung des nach dem Verfahren gemäß den Ansprüchen 1 bis 22 hergestellten Grünkörpers als Vorform hoher Dichte und Homogenität für optische Wellenleiter.

29. Verwendung des nach dem Verfahren gemäß den Ansprüchen 1 bis 22 hergestellten Grünkörpers als Vorform für Kolben für Halogen- oder Gasentladungslampen.

## Claims

1. A method of manufacturing tubes, in which a mixture of the tube material in powder form (solid phase (15) and a binder in a liquid phase (17) is introduced into a tubular mould (1) having a geometry which corresponds to the geometry of the tube to be formed, in such manner that the tubular mould is rotated about its longitudinal axis, the powder-binder mixture depositing on the inner wall (11) of the tubular mould and excessive binder being removed after which the green body formed is processed further, characterized in that the solid phase (15) and the liquid phase (17) are introduced separately into the tubular mould (1).

2. A method as claimed in claim 1, characterized in that the binder and the solid phase (15) are introduced into the tubular mould (1) after each other via dosing devices (7, 7'), in which first the liquid phase (17) is deposited on the inner wall (11) of the tubular mould (1).

3. A method as claimed in claim 2, characterized in that the binder and the solid phase (15) are introduced into the tubular mould (1) after each other and several times in succession via the dosing devices (7, 7').

4. A method as claimed in claim 1, characterized in that the binder and the solid phase (15) are simultaneously introduced into the tubular mould (1) via separate dosing devices (7, 7'), excessive liquid phase (17) being sucked off during the process.

5. A method as claimed in claims 1 to 4, characterized in that the dosing devices (7, 7') and the tubular mould (1) are moved relatively to each other during the introduction of the solid phase (15) and the liquid phase (17).

6. A method as claimed in claim 1, characterized in that a lubricating film for a better removal of the green body from the mould is provided on the inner wall (11) of the tubular mould (1) prior to introducing the liquid phase (17) and the solid phase (15).

7. A method as claimed in claim 6, characterized in that high-molecular hydrocarbons are provided as the lubricating film.

8. A method as claimed in claim 1, characterized in that the binder is multiphase.

9. A method as claimed in claim 1, characterized in that a hydrophobic fluid is used as the binder.

10. A method as claimed in claim 9, characterized in that a paraffin which is liquid at room temperature is used as the binder.

11. A method as claimed in claim 1, characterized in that the solid phase (15) is a powder-ceramic material.

12. A method as claimed in claim 11, characterized in that the powder-ceramic material is a material suitable for the manufacture of optical waveguides.

13. A method as claimed in claim 11, characterized in that the powder-ceramic material is $Al_2O_3$.

14. A method as claimed in claim 12, characterized in that the material is highly-dispersed $SiO_2$-powder of a grain size in the range from 5 to 500 nm, preferably from 10 to 200 nm, without or with a doping suitable for the adjustment of a desirable refractive index.

15. A method as claimed in any of the preceding claims 1 to 14, characterized in that the solid phase (15) is manufactured via a chemical process in the gaseous phase.

16. A method as claimed in claim 15, characterized in that the manufacture of the solid phase (15) is carried out via a chemical process in the gaseous phase immediately prior to its deposition on the inner wall (11) of the tubular mould (1).

17. A method as claimed in claim 16, characterized in that $SiH_4$ and $O_2$ are used as gaseous starting substances.

18. A method as claimed in claim 16, characterized in that the heating of the gaseous starting substances is carried out via at least one heatingdevice which is axially mowable over the tubular mould (1).

19. A method as claimed in claim 1, characterized in that the solid phase (15) is a powder-metallurgic material.

20. A method as claimed in claim 1, characterized in that the solid phase (15) is introduced into the tubular mould (1) in successive batches of different chemical composition.

21. A method as claimed in claim 20, characterized in that the solid phase (15) is introduced into the tubular mould (1) in such manner that layers of different composition corresponding to a desired refractive index profile deposit on the inner wall (11) of the tubular mould.

22. A method as claimed in claim 14, characterized in that $GeO_2$ is used as a dopant.

23. A device for carrying out the method as claimed in claims 1 to 22, comprising a tubular mould (1) which can be driven as a centrifuge, on the inner wall (11) of which substances introduced into the mould can be deposited by centrifugal forces, is characterized in that the tubular mould (1) can be closed by two diaphragms (3) provided at right angles to the longitudinal axis of the tubular mould and through the apertures (5) of which at least one tube (7, 7') can be moved as a dosing device along the longitudinal axis of the tubular mould, in such manner that a part of the tube(s) remain(s) outside the tubular mould from where it can be provided with materials to be introduced into the inner space of the tubular mould and the other part of the tube(s) present in the inner space of the tubular mould comprises at least one outlet aperture (nozzle) (9, 99) through which materials present in the tubes first reach the inner space of the tubular mould and can be deposited on the inner wall (11) of the tubular mould.

24. A device as claimed in claim 23, characterized in that the tubes (7, 7') are rotatable about their longitudinal axes.

25. A device as claimed in claim 23, characterized in that the tubular mould (1) is a tube which can be closed at its end faces by diaphragms (3).

26. A device as claimed in claim 23, characterized in that the centrifugal drive of the tubular mould (1) takes place by means of a motor to the shaft of which the tubular mould is connected.

27. A device as claimed in claim 23, characterized in that the centrifugal drive of the tubular mould (1) occurs in such manner that the tubular mould is the rotor of an electric motor.

28. The use of the green body manufactured according to the method as claimed in claims 1 to 22 as a preform of high density and homogeneity for optical waveguides.

29. The use of the green body manufactured according to the method as claimed in the claims 1 to 22 as a preform for envelopes for halogen or gas discharge lamps.

**Revendications**

1. Procédé pour la réalisation de corps tubulaires, selon lequel un mélange de la matière première du corps a former à l'état pulvérulent (phase solide 15) et d'un liant dans la phase liquide (17) est introduit dans un moule 1 dont la géométrie correspond à celle des corps à former de façon que le moule soit mis en rotation autour de son axe longitudinal, le mélange de poudre-liant se dépose sur la paroi intérieure (11) du moule tubulaire et le liant excédentaire soit enlevé, après quoi le semiproduit ainsi formé est traité davantage, caractérisé en ce que la phase solide (15) et la phase liquide (17) sont introduites d'une façon séparée l'une de l'autre dans le moule.

2. Procédé selon la revendication 1, caractérisé en ce que le liant et la phase solide (15) sont introduits dans le moule l'un après l'autre par l'intermédiaire de dispositifs de dosage (7, 7') dans le moule ce à quoi d'abord, la phase liquide (17) est déposée sur la paroi intérieure (11) du moule (1).

3. Procédé selon la revendication 2, caractérisé en ce que le liant et la phase solide (15) sont introduits successivement à plusieurs reprises par l'intermédiaire des dispositifs de dosage (7, 7') dans le moule (1).

4. Procédé selon la revendication 1, caractérisé en ce que le liant et la phase solide (15) sont introduits simultanément par l'intermédiaire de dispositifs de dosage séparés (7, 7') dans le moule (1), la phase liquide excédentaire (17) étant enlevée par aspiration pendant le procédé.

5. Procédé selon les revendications 1 à 4, caractérisé en ce que les dispositifs de dosage (7, 7') et le moule (1) sont animés d'un mouvement de va-et-vient, l'un par rapport a l'autre, pendant l'introduction de la phase solide (15) et de la phase liquide (17).

6. Procédé selon la revendication 1, caractérisé en ce qu'avant l'application de la phase liquide (17) et de la phase solide (15), un film de glissement est appliqué sur la paroi intérieure (11) du moule pour améliorer le démoulage des semi-produits.

7. Procédé selon la revendication 6, caractérisé en ce que des hydrocarbures à poids moléculaire élevé sont appliqués comme film de glissement.

8. Procédé selon la revendication 1, caractérisé en ce que le liant est polyphasé.

9. Procédé selon la revendication 1, caractérisé en ce qu'un liquide hydrophobe est utilisé comme liant.

10. Procédé selon la revendication 9 et caractérisé en ce qu'une paraffine liquide à la température ambiante normale est utilisée comme liant.

11. Procédé selon la revendication 1, caractérisé en ce que la phase solide (15) est une matière première pulvérulente céramique.

12. Procédé selon la revendication 11, caractérisé en ce que la matière première pulvérulente céramique est une matière première appropriée à la réalisation de guides d'ondes optiques.

13. Procédé selon la revendication 11, caractérisé en ce que la matière première pulvérulente céramique est du $Al_2O_3$.

14. Procédé selon la revendication 12, caractérisé en ce que la matière première est une poudre de $SiO_2$ très dispersée d'une grosseur des grains située dans la gamme comprise entre 5 et 500 nm, de préférence entre 10 et 200 nm, sans ou avec le dopage approprié pour le réglage d'un indice de réfraction approprié.

15. Procédé selon l'une des revendications précédentes 1 à 14, caractérisé en ce que la phase solide (15) est réalisée à l'aide d'un procédé chimique dans la phase gazeuse.

16. Procédé selon la revendication 15, caractérisé en ce que la réalisation de la phase solide (15) à l'aide d'un procédé chimique dans la phase gazeuse s'effectue immédiatement avant son dépôt sur la paroi intérieure (11) du moule (1).

17. Procédé selon la revendication 16, caractérisé en ce que comme substances de départ gazeuses on utilisé $SiH_4$ et $O_2$.

18. Procédé selon la revendication 16, caractérisé en ce que le chauffage des matières de départ gazeuses s'effectue à l'aide d'au moins un dispositif de chauffage pouvant être déplacé dans la direction axiale par du moule 1.

19. Procédé selon la revendication 1, caractérisé en ce que la phase solide (15) est une matière première de la métallurgie des poudres.

20. Procédé selon la revendication 1, caractérisé en ce que la phase solide (15) est introduite en charges de composition chimique différente successivement dans le moule (1).

21. Procédé selon la revendication 20, caractérisé en ce que la phase solide (15) est introduite dans le moule (1) de façon que des couches de composition différente se déposent suivant un profil d'indices de réfraction désiré sur la paroi intérieure (11) du moule.

22. Procédé selon la revendication 14, caractérisé en ce que comme dopant on utilise $GeO_2$.

23. Dispositif pour la mise en oeuvre du procédé selon la revendication 1 à 22 à l'aide d'un moule (1) pouvant être entraîné comme centrifugeuse, sur la surface intérieure (11) duquel peut se déposer par force centrifuge des matières introduites dans le moule, caractérisé en ce que le moule (1) peut être fermé par deux diaphragmes d'ouverture (3) disposés perpendiculairement à l'axe longitudinal du moule par les ouvertures (5) desquels peut être glissé au moins chaque fois un tube (7, 7') comme dispositif de dosage le long de l'axe longitudinal du moule de façon qu'une partie du tube (des tubes) se situe à l'extérieur du moule (7) et est disponible, à partir de cet endroit, avec les matières à introduire dans l'intérieur du moule et l'autre partie qui se trouve à l'intérieur du tube (des tubes), est munie chaque fois d'au moins un orifice de sortie (buse) (9, 9a) par lequel les matières contenues dans les tubes parviennent d'abord à l'intérieur du moule et peuvent se déposer sur la paroi intérieure (11).

24. Dispositif selon la revendication 23, caractérisé en ce que les tubes (7, 7') peuvent tourner autour de leurs axes longitudinaux.

25. Dispositif selon la revendication 23, caractérisé en ce que le moule (1) est un tube dont le côté avant peut être fermé par un diaphragme d'ouverture (3).

26. Dispositif selon la revendication 23, caractérisé en ce que l'entraînement centrifuge du moule (1) s'effectue à l'aide d'un moteur dont l'arbre est relié au moule.

27. Dispositif selon la revendication 23, caractérisé en ce que l'entraînement centrifuge du moule (1) s'effectue du fait que le moule est le rotor d'un moteur électrique.

28. Application du semi-produit réalisé conformément au procédé selon la revendication 1 à 22 comme préforme de densité et d'homogénéité élevées pour des guides d'ondes optiques.

29. Application du semi-produit réalisé conformément au procédé selon la revendication 1 à 22 comme préforme pour des ampoules pour lampes à décharge dans le gaz ou à l'halogène.